# EUROPÄISCHE PATENTSCHRIFT

(11) **EP 2 367 250 B1**
(45) Veröffentlichungstag und Bekanntmachung des Hinweises auf die Patenterteilung: **20.11.2013**
(21) Anmeldenummer: 11001964.3
(22) Anmeldetag: 10.03.2011
(51) Int. Cl.: H02G 3/12

(54) **Geräteeinbaudose für Leitungsführungskanäle oder Installationskanäle**
Device mounting plate for cable guidance channels or installation channels
Boîtier encastrable d'appareils pour canaux de guidage de conduite ou canaux d'installation

(30) Priorität: 19.03.2010 DE 102010012075
(43) Veröffentlichungstag der Anmeldung: 21.09.2011
(73) Patentinhaber: Tehalit GmbH, 67716 Heltersberg (DE)
(72) Erfinder: Mattfeld, Christian, 66919 Schauerberg (DE)
(74) Vertreter: Nuss, Laurent

(56) Entgegenhaltungen:
- DE-A1- 2 539 299
- DE-A1- 19 527 133
- DE-A1-102005 022 441

## Beschreibung

Solche gattungsgemäßen Geräteeinbaudosen für Leitungsführungskanäle sind bekannt; man vergleiche beispielsweise die DE 200 00 777 U1 sowie die DT 2539299 A1. Die darin beschriebenen Geräteeinbaudosen besitzen ein nach oben hin offenes Gehäuse mit einem Boden oder einer Grundplatte sowie Einrichtungen zum Befestigen eines Elektroeinbaugerätes. Bei bekannten Geräteeinbaudosen gibt es verschiedene Möglichkeiten, diese an einem Leitungsführungskanal oder Installationskanal zu befestigen. Viele der bekannten Befestigungsarten erfordern allerdings einen besonders hohen Montageaufwand, was als Nachteil zu werten ist.

In der DE 92 14 202 U1 ist eine Geräteeinbaudose beschrieben, bei der eine Befestigung über einen drehbeweglichen Knebelverschluss erfolgt. Ein solcher Verschluss ist aufwändig in der Herstellung.

In der DE 31 12 347 C1 ist eine Einbaudose für Elektroinstallationsgeräte beschrieben, welche in Führungsnuten der Seitenwandungen der Einbaudose in deren Längsrichtung bewegbare Halter aufweist. Diese Halter sind als Klammerschieber ausgebildet, welche die Aufrastschenkel der Aufrasthalter hintergreifen und über Befestigungsschrauben mit den Rastschenkeln verspannt sind. Der Montageaufwand ist auch bei dieser Lösung sehr hoch, da zunächst die Klammerschieben in die nutenförmigen Öffnungen der Seitenwände eingesetzt und anschließend von oben mit den Befestigungsschrauben befestigt werden müssen.

Aus der DE 76 11 901 U1 ist ein Kabelkanal mit einem Unterteil und einem lösbar damit verbindbaren Deckelteil bekannt, bei dem Haltestücke mit Befestigungselementen im Deckelteil des Kabelkanals miteinander kooperieren. Auf diese Weise wird die Geräteeinbaudose am Deckel des Kabelkanals befestigt.

In der EP 0 615 326 B1 ist eine Geräteeinbaudose mit Befestigungselementen zur Festlegung an Bodenbereichen von Kabelkanälen beschrieben, wobei die Befestigung über einen beweglichen Rastverschluss erfolgt, der zweiteilig aus einem Exzenterbolzen und einem mit einer Eingriffsöffnung für den Exzenterstift versehenen Schiebekeil aufgebaut ist. Durch diese Maßnahme soll die bei der bekannten Version erforderliche Drehbewegung des Rastelementes in eine lineare Schiebebewegung transformiert werden, wodurch die Überbrückung auftretender Toleranzen ohne Schwierigkeiten erfolgen kann, da hier ein keilförmiges Element unter die zugeordneten Rastschenkel des Kabelkanals geführt wird. Auf diese Weise soll eine Dreipunktauflage entstehen und durch die Art der Befestigung ein fester Sitz der Geräteeinbaudose im Kabelkanal bei optimalem Toleranzausgleich sichergestellt sein. Nachteilig ist jedoch bei dieser Lösung, dass der Rastverschluss aus mehreren Einzelbauteilen aufgebaut ist, bestehend aus einem Exzenterbolzen, Exzenterstift sowie Schiebekeil. Der Exzenterbolzen muss über eine schlitzartige Eingriffsöffnung für ein Schraubwerkzeug betätigt werden. Dabei muss der Exzenterstift bei der Drehbewegung des Exzenterbolzens die Rasterhebung des Langloches überwinden, um von der Raststellung in die Öffnungsstellung zu gelangen. Auch ist eine solche Lösung für frontrastende Geräteeinbaudosen zur Befestigung an einer C-Schiene eines Kanalunterteils nicht zufriedenstellend.

Vor diesem Hintergrund liegt daher der vorliegenden Erfindung die Aufgabe zugrunde, eine Geräteeinbaudose für Leitungsführungskanäle oder Installationskanäle anzugeben, die eine erleichterte Montage, zugleich aber auch Demontage ermöglicht und in der Montageposition eine Verschiebbarkeit entlang des Kanals gewährleistet.

Die erfindungsgemäße Geräteeinbaudose besteht in seinen Grundelementen, wie im Stand der Technik bekannt, aus einem nach oben offenen Gehäuse mit einer Grundplatte (oder Boden) sowie Einrichtungen zum Befestigen eines Elektroeinbaugerätes. An der Unterseite des Gehäuses befinden sich ein oder mehrere Halteelemente zum Befestigen der Geräteeinbaudose an ein Kanalunterteil. Die erfindungsgemäße Geräteeinbaudose ist dadurch gekennzeichnet, dass an der Grundplatte des Gehäuses ein mit einem Halteprofil des Kanalunterteils kooperierender Klemmarm ausgebildet ist, der in einer Ausnehmung der Grundplatte über eine in Längsrichtung des Kanals verschiebbare und an der Grundplatte aufliegenden Schieberplatte von einer Montageposition in eine Arretierposition axial beweglich ist, wobei die Schieberplatte wenigstens ein Führungsloch aufweist, in dem wenigstens ein am Klemmarm ausgebildeter Führungsstift zur Bewegung des Klemmarms führbar ist.

Beim Herausziehen der Schieberplatte gleiten die Führungsstifte des Klemmarms entlang der begrenzenden Führungsflächen des Führungsloches, wodurch der Klemmarm in das am Kanalboden ausgebildete Halteprofil (beispielsweise C-Schiene) untergreift und die Geräteeinbaudose dadurch am Kanal fixiert ist. Zum Lösen der Anordnung wird die Schieberplatte in die Gegenrichtung zurückgeschoben, wodurch der Klemmarm freigesetzt wird.

Die Geräteeinbaudose kann in der Montageposition die gewünschte Position entlang des Kanals verschoben werden. Die erfindungsgemäße Verschlusslösung ermöglicht eine schnelle Positionierung und Montage von Geräteeinbaudosen, insbesondere frontrastenden Geräteeinbaudosen oder anderen Elektroinstallationsgeräten an einem Leitungsführungskanal oder Installationskanal.

Der Klemmarm besteht aus zwei versetzten Abschnitten, an deren Enden Klemmbacken ausgebildet sind, welche zur Verrastung oder zum Reibverschluss mit dem Halteprofil des Kanalunterteils kooperieren. In einer Ausführungsform ist der Klemmarm so ausgestaltet, dass die Klemmbacken an den Enden gegenüberliegend angeordnet sind und beidseitig in eine C-Schiene als Halteprofil greifen. Um den Bewegungsgrad des Klemmarms vorzugeben, befinden sich an den Ecken der Ausnehmung vorzugsweise Anschlagselemente. Diese schützen zugleich auch vor einer Überdrehung des Klemmarmes, falls die Führungslöcher in der Schieberplatte zu viel Spiel haben sollten. Ansonsten wird die axiale Bewegung des Klemmarms durch die Geometrie der Führungslöcher vorgegeben, in denen die am Klemmarm ausgebildeten Führungsstifte entlang der Führungsflächen geführt werden. Durch die Ausgestaltung des Führungsloches kann die Art der Drehbewegung und der Bewegungsgrad des Klemmarms vorgegeben werden.

Zur verbesserten Führung der Schieberplatte in der Längsrichtung des Kanals sind in der Schieberplatte zusätzlich weitere Führungslöcher als Langlöcher ausgebildet, in denen beim Verschieben der Schieberplatte am Gehäuse fixierte Führungsstifte führbar sind. Diese Führungsstifte sitzen nicht am Klemmarm und sind nicht beweglich. Aufgrund der Ausgestaltung der Langlöcher sowie der fixierten Führungsstifte wird die Verschiebbarkeit der Schieberplatte in Längsrichtung gewährleistet und eine Seitenbewegung oder ein Herausschnappen der Schieberplatte verhindert.

Die für die Bewegung des Klemmarms verantwortlichen Führungslöcher weisen vorzugsweise wenigstens zwei miteinander zusammenhängende Führungsflächen auf, an denen der Führungsstift entlang gleitet. Vorzugsweise befindet sich jeweils ein für die Bewegung des Klemmarms verantwortliches Führungsloch an den Stirnseiten der Schieberplatte. Vorzugsweise besitzt das für die Bewegung des Klemmarms verantwortliche Führungsloch eine dreiseitige geometrische Ausgestaltung. Für die Drehbewegung des Klemmarms sind die Führungsflächen vorzugsweise abgerundet.

An den Stirnseiten der Schieberplatte befindet sich vorzugsweise ein Schieberarm mit einer Ausnehmung zur Aufnahme eines Montagewerkzeuges. Dadurch kann beispielsweise mit einem Schraubendreher die Schieberplatte leicht von oben in die entsprechende Position gebracht werden.

Vorzugsweise handelt es sich bei der erfindungsgemäßen Geräteeinbaudose um eine frontrastende Geräteeinbaudose. Die erfindungsgemäße Verschlusslösung ermöglicht eine einfache Montage, zugleich aber auch Demontage von mehreren aneinander gereihten Elektroeinbaugeräten an einem Wandkanal. Dadurch wird eine nachträgliche Demontage von Geräteeinbaudosen entlang eines Wandkanals erheblich erleichtert. Auch können einzelne Elektroeinbaugeräte punktuell entfernt werden. Die aus dem Stand der Technik bekannten Drehknebel- oder Exzenterlösungen hingegen sind umständlich und auch zugleich teuer in deren Herstellung.

Die Erfindung wird in den nachfolgenden Zeichnungen näher erläutert. Es zeigen
- Fig. 1: eine erfindungsgemäße Geräteeinbaudose von der Unterseite zusammen mit einem Aufbau;
- Fig. 2: die erfindungsgemäße Verschlusslösung von oben;
- Fig. 3: eine Ausführungsform einer erfindungsgemäßen Schieberplatte, und
- Fig. 4: eine Einbaulösung an einem Kanalunterteil.

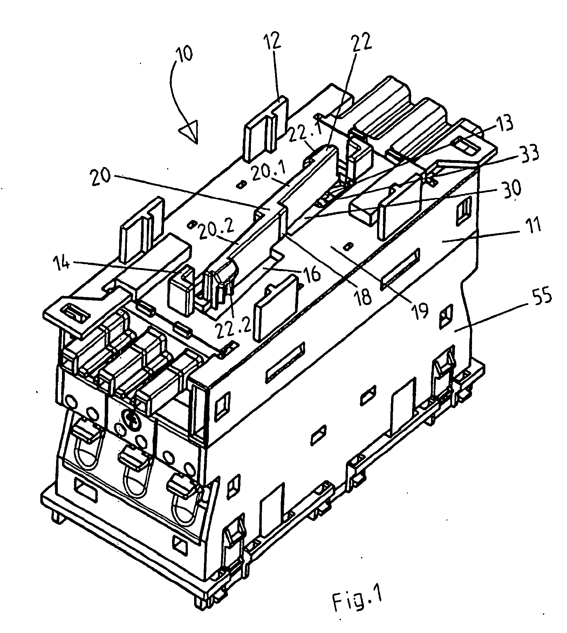

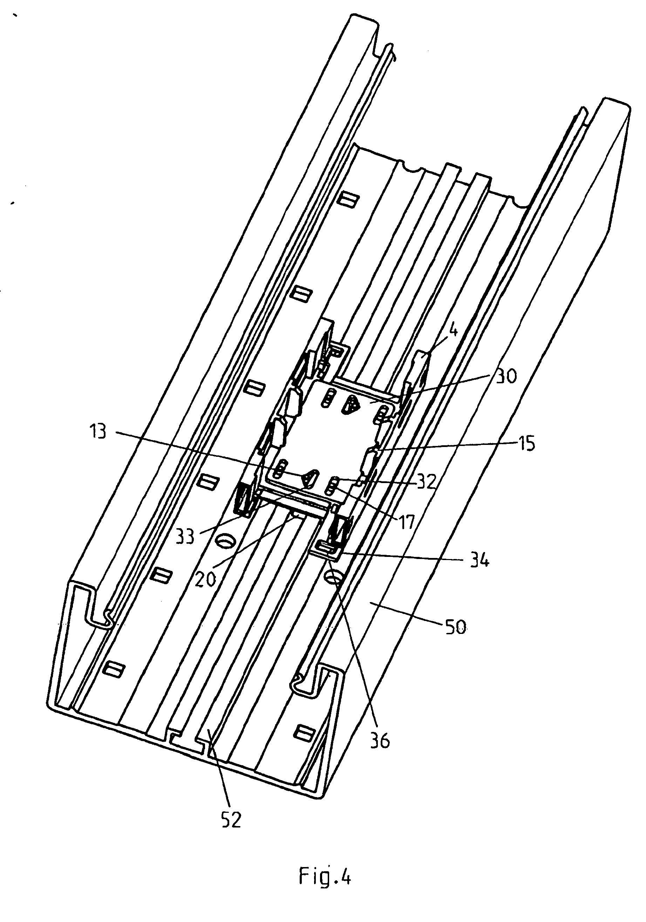

In Fig. 1 erkennt man eine Geräteeinbaudose mit einem Elektroeinbaugerät 55, bestehend aus einem Gehäuse 11 und einer Grundplatte 19. In der Grundplatte 19 ist eine Ausnehmung 16 eingearbeitet, in der ein Klemmarm 22 axial beweglich gelagert ist. Der Klemmarm 20 besteht aus zwei versetzten Abschnitten 20.1, 20.2, an deren Enden sich gegenüberliegend angeordnete Klemmbacken 22.1, 22.2 befinden. Die Klemmbacken 22 greifen in das entsprechende Halteprofil 52 des Kanalunterteils 50 (vgl. Fig. 4).

Am Klemmarm 20 sind zwei endständige Führungsstifte 13 ausgebildet, welche durch die Ausnehmung 16 in entsprechende Führungslöcher 33 der darunterliegenden Schieberplatte 30 greifen. An den Ecken der Ausnehmung 16 sind Anschlagselemente 14 für den Klemmarm 20 angeordnet.

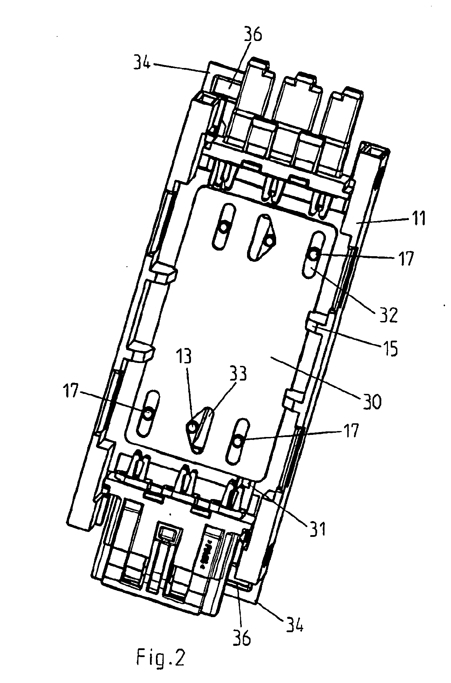

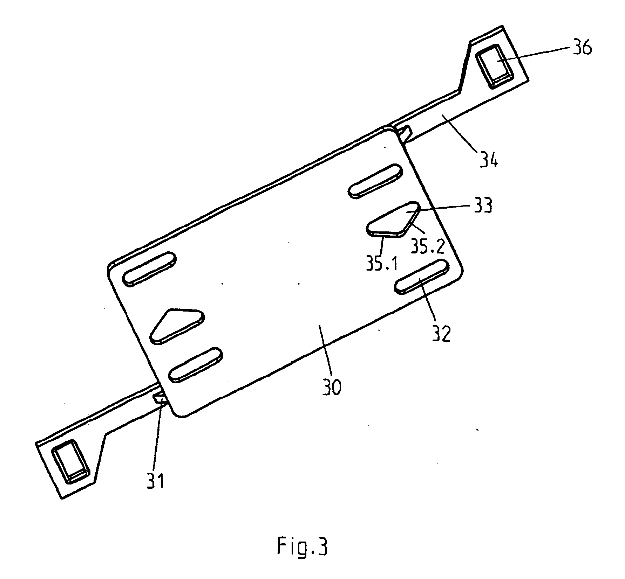

Je nach Gerätetyp befinden sich zudem an der Unterseite der Geräteeinbaudose Halteelemente 12 zur Befestigung an ein Kanalunterteil 50. In der gezeigten Ausführungsform wird der Klemmarm 20 entlang einer Schwenkachse 18 von einer Montageposition in eine Arretierungsposition bewegt. Die axiale Bewegung des Klemmarms 20 erfolgt über die an der Grundplatte 19 anliegenden Schieberplatte 30, welche in den Figuren 2 und 3 im Detail zu sehen ist.

In Fig. 2 erkennt man die erfindungsgemäße Geräteeinbaudose von oben. In dem Gehäuse 11 ist die Schieberplatte 30 eingelegt. Ein Herausfallen der Schieberplatte 30 wird durch Nasen 15, die an den Seitenwänden des Gehäuses 11 ausgebildet sind, verhindert. In die Schieberplatte 30 sind Langlöcher 32 eingearbeitet, in denen am Gehäuse 11 fixierte Führungsstifte 17 geführt werden.

An den Stirnseiten der Schieberplatte 30 erkennt man jeweils ein freigeschnittenes und abgewinkeltes Langloch als Führungsloch 33, in dem entlang der Führungsflächen 35.1, 35.2 der am Klemmarm 20 ausgebildete Führungsstift 13 geführt wird. Durch die vorgegebene Geometrie des Führungsloches 33 wird die Bewegung des Klemmarms 20 von einer Montageposition in eine Arretierposition vorgegeben. Hierfür wird die Schieberplatte 30 über entsprechende Schieberarme 34 in Längsrichtung herausgeschoben. Der Schieberarm 34 besitzt hierfür zweckmäßigerweise eine Ausnehmung 34, so dass das Herausziehen mit einem Schraubendreher erfolgen kann. Durch das Herausziehen der Schieberplatte 30 gleiten die Führungsstifte 13 entlang den Führungsflächen 35 der Führungsfläche 33, und der Klemmarm 20 wird in die gewünschte Position bewegt.

In Fig. 3 erkennt man den erfindungsgemäßen Aufbau der Schieberplatte 30. Deutlich zu erkennen sind die Langlöcher 32 für die fixierten Führungsstifte 17 sowie die beiden an den Stirnseiten angeordneten abgewinkelten Langlöcher 33 mit den entsprechenden Führungsflächen 35.1, 35.2 für die Führungsstifte 13 des Klemmarms 20. Ferner ist an der Schieberplatte 30 eine Nase 31 ausgebildet, welche einen Anschlagspunkt beim Herausziehen des Schieberarms 34 bietet.

In Fig. 4 erkennt man ein Kanalunterteil 50 mit einer am Kanalboden verlaufenden C-Schiene als Halteprofil 52. In der C-Schiene ist der erfindungsgemäße Geräteeinsatz befestigt. Die Befestigung erfolgt über den Klemmarm 20, der in der zentralen Rinne einen Reibverschluss mit dem Halteprofil 52 eingeht. In dem Gehäuse 11 ist die Schieberplatte 30 eingelegt, in der die Führungslöcher 32, 33 eingearbeitet sind. Auch die Führungsstifte 13 des Klemmarms 20 sowie die fixierten Führungsstifte 17 sind zu erkennen. Die Schieberplatte 30 selbst wird von Nasen 15 gehalten.

## Patentansprüche

1. Geräteeinbaudose für Leitungsführungskanäle oder Installationskanäle, umfassend
- ein nach oben offenes Gehäuse (11) mit einer Grundplatte (19),
- Einrichtungen zum Befestigen eines Elektro-Einbaugerätes (55), und
- einem oder mehreren an der Unterseite des Gehäuses (11) angeordneten Halteelementen (12) zum Befestigen der Geräteeinbaudose an ein Kanalunterteil (50),
**dadurch gekennzeichnet, dass** an der Grundplatte (19) des Gehäuses (11) ein mit einem Halteprofil (52) des Kanalunterteils (50) kooperierender Klemmarm (20) ausgebildet ist, der in einer Ausnehmung (16) der Grundplatte (19) über eine in Längsrichtung des Kanals verschiebbare und an der Grundplatte (19) aufliegenden Schieberplatte (30) von einer Montageposition in eine Arretierposition axial beweglich ist, wobei die Schieberplatte (30) wenigstens ein Führungsloch (33) aufweist, in dem wenigstens ein am Klemmarm (20) ausgebildeter Führungsstift (13) zur Bewegung des Klemmarms (20) führbar ist.

2. Geräteinbaudose nach Anspruch 1, **dadurch gekennzeichnet, dass** der Klemmarm (20) aus zwei gegenüber versetzten Abschnitten (20.1, 20.2) besteht.

3. Geräteinbaudose nach Anspruch 1 oder 2, **dadurch gekennzeichnet, dass** an den Enden des Klemmarms (20) Klemmbacken (22) ausgebildet sind, welche mit dem Halteprofil (52) des Kanalunterteils (50) kooperieren.

4. Geräteinbaudose nach Anspruch 3, **dadurch gekennzeichnet, dass** es sich bei dem Halteprofil (52) des Kanalunterteils (50) um eine C-Schiene handelt.

5. Geräteinbaudose nach einem der vorgehenden Ansprüche, **dadurch gekennzeichnet, dass** an den Ecken der Ausnehmung (16) Anschlagselemente (14) für den Klemmarm (20) angeordnet sind.

6. Geräteinbaudose nach einem der vorgehenden Ansprüche, **dadurch gekennzeichnet, dass** in der Schieberplatte (30) weitere Führungslöcher als Langlöcher (32) ausgebildet sind, in denen beim Verschieben der Schieberplatte (30) fixierte Führungsstifte (17) führbar sind.

7. Geräteinbaudose nach einem der vorgehenden Ansprüche, **dadurch gekennzeichnet, dass** das für die Bewegung des Klemmarms (20) verantwortliche Führungsloch (33) wenigstens zwei miteinander zusammenhängende Führungsflächen (35.1, 35.2) aufweist, an denen der Führungsstift (13) entlang führbar sind.

8. Geräteinbaudose nach Anspruch 7, **dadurch gekennzeichnet, dass** die Führungsflächen (35) abgerundet sind.

9. Geräteinbaudose nach einem der vorgehenden Ansprüche, **dadurch gekennzeichnet, dass** an wenigstens einer Stirnseite der Schieberplatte (30) ein Schieberarm (34) mit einer Ausnehmung (36) zur Aufnahme eines Montagewerkzeuges ausgebildet ist.

10. Geräteinbaudose nach einem der vorgehenden Ansprüche, **dadurch gekennzeichnet, dass** die Schieberplatte (30) von Haltenasen (15) gehalten wird.

11. Geräteinbaudose nach einem der vorgehenden Ansprüche, **dadurch gekennzeichnet, dass** es sich um eine frontrastende Geräteeinbaudose handelt.

## Claims

1. Appliance flush-mounting box for cable guide ducts or electrical installation ducts, comprising
- a housing (11) which is open at the top and has a base plate (19),
- devices for mounting an electrical flush-mounting appliance (55), and
- one or more holding elements (12), which are arranged on the lower face of the housing (11), for mounting the appliance flush-mounting box on a duct lower part (50),
**characterized in that** a clamping arm (20) which cooperates with a holding profile (52) of the duct lower part (50) is formed on the base plate (19) of the housing (11), it being possible for the said clamping arm to be axially moved in a recess (16) in the base plate (19) from an assembly position to a locking position by means of a slide plate (30) which can be displaced in the longitudinal direction of the duct and rests on the base plate (19), wherein the slide plate (30) has at least one guide hole (33) in which at least one guide pin (13), which is formed on the clamping arm (20), can be guided in order to move the clamping arm (20).

2. Appliance flush-mounting box according to Claim 1, **characterized in that** the clamping arm (20) comprises two offset sections (20.1, 20.2).

3. Appliance flush-mounting box according to Claim 1 or 2, **characterized in that** clamping jaws (22) are formed at the ends of the clamping arm (20), the said clamping jaws cooperating with the holding profile (52) of the duct lower part (50).

4. Appliance flush-mounting box according to Claim 3, **characterized in that** the holding profile (52) of the duct lower part (50) is a C-shaped rail.

5. Appliance flush-mounting box according to one of the preceding claims, **characterized in that** stop elements (14) for the clamping arm (20) are arranged at the corners of the recess (16).

6. Appliance flush-mounting box according to one of the preceding claims, **characterized in that** further guide holes in the form of elongate holes (32) are formed in the slide plate (30), it being possible for fixed guide pins (17) to be guided in the said guide holes when the slide plate (30) is displaced.

7. Appliance flush-mounting box according to one of the preceding claims, **characterized in that** the guide hole (33) which is responsible for moving the clamping arm (20) has at least two guide faces (35.1, 35.2) which are connected to one another and along which the guide pin (13) can be guided.

8. Appliance flush-mounting box according to Claim 7, **characterized in that** the guide faces (35) are rounded.

9. Appliance flush-mounting box according to one of the preceding claims, **characterized in that** a slide arm (34) with a recess (36) for receiving an assembly tool is formed on at least one end face of the slide plate (30).

10. Appliance flush-mounting box according to one of the preceding claims, **characterized in that** the slide plate (30) is held by holding lugs (15).

11. Appliance flush-mounting box according to one of the preceding claims, **characterized in that** it is a front-latching appliance flush-mounting box.

## Revendications

1. Boîtier d'appareil encastrable pour des caniveaux de câblage ou des caniveaux d'installation électrique, comprenant :
- un boîtier (11) ouvert vers le haut, avec une plaque de base (19),
- des dispositifs pour la fixation d'un appareil électrique encastrable (55), et
- un ou plusieurs éléments de maintien (12) disposés sur le dessous du boîtier (11) pour la fixation du boîtier d'appareil encastrable sur une partie inférieure de caniveau (50),
**caractérisé en ce qu'**un bras de serrage (20) coopérant avec un profilé de maintien (52) de la partie inférieure de caniveau (50) est formé sur la plaque de base (19) du boîtier (11), bras qui est axialement mobile d'une position de montage dans une position de blocage dans un évidement (16) de la plaque de base (19) au moyen d'un coulisseau plan (30) pouvant coulisser dans la direction longitudinale du caniveau et reposant sur la plaque de base (19), sachant que le coulisseau plan (30) présente au moins un trou de guidage (33) dans lequel peut être guidé, pour le déplacement du bras de serrage (20), au moins un tenon de guidage (13) formé sur le bras de serrage (20).

2. Boîtier d'appareil encastrable selon la revendication 1, **caractérisé en ce que** le bras de serrage (20) est constitué de deux parties (20.1, 20.2) en déport l'une par rapport à l'autre.

3. Boîtier d'appareil encastrable selon la revendication 1 ou 2, **caractérisé en ce que** des mors de serrage (22) sont formés aux extrémités du bras de serrage (20) et coopèrent avec le profilé de maintien (52) de la partie inférieure de caniveau (50).

4. Boîtier d'appareil encastrable selon la revendication 3, **caractérisé en ce que** le profilé de maintien (52) de la partie inférieure de caniveau (50) est un profilé en C.

5. Boîtier d'appareil encastrable selon l'une des revendications précédentes, **caractérisé en ce que** des éléments de butée (14) pour le bras de serrage (20) sont disposés dans les coins de l'évidement (16).

6. Boîtier d'appareil encastrable selon l'une des revendications précédentes, **caractérisé en ce que** des trous de guidage supplémentaires sont réalisés dans le coulisseau plan (30) sous la forme de trous oblongs (32), dans lesquels peuvent être guidés des tenons de guidage (17) immobilisés lors du coulissement du coulisseau plan (30).

7. Boîtier d'appareil encastrable selon l'une des revendications précédentes, **caractérisé en ce que** le trou de guidage (33) responsable du déplacement du bras de serrage (20) présente au moins deux faces de guidage mutuellement contiguës (35.1, 35.2), le long desquelles peut être guidé le tenon de guidage (13).

8. Boîtier d'appareil encastrable selon la revendication 7, **caractérisé en ce que** les faces de guidage (35) sont arrondies.

9. Boîtier d'appareil encastrable selon l'une des revendications précédentes, **caractérisé en ce qu'**un bras de coulisseau (34) doté d'un évidement (36) pour recevoir un outil de montage est formé sur au moins un côté frontal du coulisseau plan (30).

10. Boîtier d'appareil encastrable selon l'une des revendications précédentes, **caractérisé en ce que** le coulisseau plan (30) est maintenu par des ergots de maintien (15).

11. Boîtier d'appareil encastrable selon l'une des revendications précédentes, **caractérisé en ce qu'**il s'agit d'un boîtier d'appareil encastrable à enclenchement frontal.
